# EUROPÄISCHE PATENTSCHRIFT

(11) **EP 1 451 766 B1**
(45) Veröffentlichungstag und Bekanntmachung des Hinweises auf die Patenterteilung: **22.02.2006**
(21) Anmeldenummer: 02795130.0
(22) Anmeldetag: 09.12.2002
(51) Int. Cl.: G06K 15/00

(54) **VERFAHREN, GERÄTESYSTEM UND COMPUTERPROGRAMMPRODUKT ZUR ERZEUGUNG EINES GEDRUCKTEN DOKUMENTS AUS MEHREREN EINGANGSDATEIEN**
METHOD, SYSTEM OF DEVICES, AND COMPUTER PROGRAM PRODUCT FOR THE PRODUCTION OF A PRINTED DOCUMENT FROM SEVERAL INPUT FILES
PROCEDE, SYSTEME D'APPAREILS ET PRODUIT PROGRAMME D'ORDINATEUR DESTINES A LA PRODUCTION D'UN DOCUMENT IMPRIME A PARTIR DE PLUSIEURS FICHIERS D'ENTREE

(30) Priorität: 10.12.2001 DE 10160607
(43) Veröffentlichungstag der Anmeldung: 01.09.2004
(73) Patentinhaber: Océ Printing Systems GmbH, 85586 Poing (DE)
(72) Erfinder: MEIR, Manfred, 85521 Ottobrunn (DE); TISCHLER, Karl, M., 86633 Neuburg/Donau (DE)
(74) Vertreter: Schaumburg, Karl-Heinz
(86) Internationale Anmeldenummer: PCT/EP2002/013933
(87) Internationale Veröffentlichungsnummer: WO 2003/054783

(56) Entgegenhaltungen:
- EP-A- 0 753 833
- WO-A-00/68877
- US-A- 5 398 289

## Beschreibung

Die Erfindung betrifft ein Verfahren, ein Gerätesystem und ein Computerprogrammprodukt zur Erzeugung eines gedruckten Dokuments aus mehreren Eingangsdateien.

Die Erfindung betrifft insbesondere ein Verfahren zum Aufbereiten von Druckdaten, die zum Drucken einer Zeitung oder einer Zeitschrift verwendet werden. In Produktionssystemen zur Erstellung derartiger Druckschriften ist es üblich, die Druckdaten auf sogenannte Signaturen zu drucken. Auf derartigen Signaturen werden mehrere Seiten eines Dokuments auf einem zusammenhängenden Aufzeichnungsträger (Einzelblatt- oder Papierbahn) in einer bestimmten Anordnung derart gedruckt, daß wenn der Aufzeichungsträger in einer für die Signatur charakteristischen Weise geschnitten und gefaltet wird, die dabei entstehende Seitenfolge des fertigen Dokuments genau der vorgegebenen, gewünschten Reihenfolge entspricht.

Aus der US-A-5,398,289 ist ein Verfahren und ein System von Drucken von Signaturen bekannt. Auch aus der WO00/68877, gegen die die Ansprüche abgegrenzt wurden, ist ein Verfahren und ein System zum signaturenweisen Bearbeiten von Druckdaten bekannt.

Im Bereich des digitalen Druckens hat sich ein Spezialgebiet gebildet, das sogenannte "Print on Demand" (PoD). Ein entsprechendes PoD-System ist z. B. unter dem Titel "Entwicklung neuer Medien-Konzepte für PoD-Dienstleister" in der Zeitschrift Deutscher Drucker Nr. 35/98 vom 17.09.1998 beschrieben.

Gegenüber konventionellem Offset-Druck besteht ein Vorteil von PoD-Systemen darin, daß Druckgut in relativ kurzer Zeit (just in time) auf Anforderung und, falls gewünscht, bedarfsweise mit zusätzlichen Daten aufbereitet, hergestellt werden kann. Kleinere Auflagen von etwa 2 bis einige zehn Tausend Exemplaren von Dokumenten können damit wirtschaftlich gedruckt werden. Auf Anfrage kann damit kurzfristig eine bestimmte, aktuell benötigte Anzahl der jeweiligen Dokumente gedruckt werden. Damit können Kosten für die Lagerhaltung sowie für Überbestände gedruckter Dokumente eingespart werden.

Im Bereich des Zeitungsdrucks ist es bis heute üblich, Zeitungen in großen Auflagen (einige hundert Tausend) zentral zu drucken und dann über Transportwege aller Art, einschließlich Schifffahrt und Luftfahrt, gebietsweise bis hin zu weltweit zu vertreiben. Insbesondere für Tageszeitungen besteht dabei das Problem, daß sie nicht mehr tagesaktuell ausgeliefert werden können, weil der Transportweg zu lange ist bzw. weil sie bereits während des Transports über Datumsgrenzen hinweg transportiert werden müssen.

Aus der US 2001/0039553 A1 ist ein Dokumentenmanagementsystem bekannt, bei dem zusammeneehörige Dateien mittels einer Markierung gekennzeichnet und somit geclustert werden.

Es ist Aufgabe der Erfindung, das bedarfsweise Drucken und Ausliefern von Dokumenten, die eine Vielzahl von Seiten umfassen, möglichst kosten- und zeitsparend zu ermöglichen.

Diese Aufgabe wird durch ein Verfahren mit den Merkmalen des Patentanspruchs 1 gelöst. Vorteilhafte weiterbildungen der Erfindung sind in den Unteransprüchen angegeben.

Erfindungsgemäß ist es bei dem Verfahren gemäß Patentanspruch 1 zum automatischen Erzeugen gedruckter Dokumente aus mehreren Dateien, die jeweils Daten einer vorgegebenen Anzahl enthalten, vorgesehen, die Dateien von einem Druckvorverarbeitungssystem empfangen zu lassen. Die Übertragung der Daten kann dabei über beliebige Strecken und elektronische Transfermedien erfolgen, insbesondere über lokale Computernetzwerke (Local Area Network, LAN) oder über eine gesicherte oder ungesicherte Internetverbindung (Wide Area Network, WAN).

Im Druckvorverarbeitungssystem werden die empfangenen Dateien in einem logischen Eingangsspeicherbereich abgelegt und dann mittels eines Prüfprogramm-Moduls festgestellt, welche Eingangsdaten jeweils zu einer oder mehreren Eingangsdateien zusammenfassende Clusterdatei zu verbinden sind. Das Prüfprogramm-Modul kann automatisch oder manuell gestartet werden. Im Falle des automatischen Starts kann dies insbesondere automatisch in gewissen Zeitabständen erfolgen, so daß eine mehrere Eingangsdateien zusammenfassende Clusterdatei jeweils unmittelbar nach Eingang aller zum jeweiligen Cluster gehörigen Eingangsdateien gebildet werden kann und ggf. die entsprechende Clusterdatei direkt erstellt und zur signaturenweisen Ausgabe weitergeleitet wird.

Nach Überprüfung der Eingangsdateien durch das Prüfprogramm-Modul werden aus den zugeordneten Eingangsdateien mittels eines Kombinationsprogramm-Moduls (Merger-Modul) die Clusterdateien erstellt und in einem logischen Clusterspeicherbereich abgelegt. Danach werden die Clusterdateien zur signaturenweisen Ausgabe auf einem Druckgerät wahlweise direkt an das Druckgerät oder an ein dazwischen geschaltetes-Druckproduktionssystem weitergeleitet. In dem Druckproduktionssystem können die Clusterdateien ausgeschossen werden, d. h. seitenweise signaturangepaßt umsortiert und/oder die Daten ggf. gerastert werden, die dann an einem Hochleistungsdrucker zur auftragsweisen Bearbeitung weitergeleitet werden.

Durch die erfindungsgemäße Vorgehensweise, bei der aus einzelnen Seiten, die insbesondere in einem Redaktionssystem einer Zeitungsredaktion erstellt werden und bei der die einzelnen Seiten-Dateien an ein Druckvorverarbeitungssystem gesandt werden, eine sehr hohe Flexibilität, weil die Redakteure ihre jeweiligen Artikel seitenweise - und ggf. seitenübergreifend - erstellen können. Weiterhin können die Seiten-Dateien sofort nach Fertigstellen der entsprechenden Seiten voll- oder teilautomatisch an das Druckvorverarbeitungssystem gesandt werden. Nach Eingang aller zu einem Cluster gehörenden Seiten-Dateien im Druckvorverarbeitungssystem kann aus der zugehörigen Clusterdatei sofort die entsprechende Zeitungs-Signatur erstellt werden und damit quasi ein redaktionsfrischer Druck erfolgen.

Vorteilhafterweise kann dieser redaktionsfrische Druck nicht nur an einem Redaktions-Standort, sondern auch auf einfache Art und Weise an einem beliebigen Standort erfolgen zu dem eine technische Datenverbindung besteht. Somit müssen die entsprechenden Zeitungsexemplare nicht mehr als Druckexemplare über große Entfernungen hinweg transportiert werden, sondern werden nur noch als Daten über die entsprechenden Datennetzwerke, insbesondere weltweit, verteilt. Damit kann beispielsweise in Australien eine in Deutschland herausgegebene Zeitung praktisch zum selben Zeitpunkt als Druckexemplar erzeugt und verteilt werden, wie im Ursprungsland Deutschland.

Durch die weitgehend automatisierte Verfahrensweise der vorliegenden Erfindung ist es insbesondere möglich, daß große Datenmengen (z. B. einige zig bis einige hundert Seiten) vollautomatisch zu Clustern zusammengefügt und auf ihre Konsistenz hin geprüft werden.

In einem bevorzugten Ausführungsbeispiel der Erfindung wird aus der Clusterdatei eine Druckdatei erstellt, die insbesondere für einen schnellen Ausdruck in einem Hochgeschwindigkeits-Drucksystem geeignet ist, beispielsweise im sogenannten Advanced Function Presentation Datastream (AFPDS), im Intelligent Printer Datastream (IPDS), in PostScript (PS), in der Printer Control Language (PCL) oder im Datenstrom. LCDS, der von der Firma Xerox Corp. entwickelt wurde. Die derart erzeugte Druckdatei umfaßt dann insbesondere mehrere Druck-Signaturen und diese Druckdatei wird dann insbesondere einem Ausschieß-Programm zugeführt, in dem die genaue Druckreihenfolge festgelegt wird, damit die nacheinander gedruckten Signaturen am Ende des Ausdrucks genau der gewünschten Seitenreihenfolge innerhalb des Dokuments entsprechen.

Die Automatisierung des erfindungsgemäßen Vorgangs kann insbesondere erweitert werden, indem im Überprüfungsvorgang eine automatische Filterfunktion vorgesehen ist, mit der die Eingangsdateien durchsucht und die Zwischendateien nach vorgegebenen Kriterien erstellt werden. Dabei ist es insbesondere vorteilhaft, wenn in den Eingangsdaten bereits Informationen über das Gesamtdokument enthalten sind, z. B. über die gesamte Seitenzahl, über den Umfang der Seiten eines Clusters und/oder über eine Signatur. Diese Gesamtinformationsdaten können wahlweise in einer separaten Begleitdatei und/oder innerhalb der Einzelseiten-Dateien übertragen werden, insbesondere in Form eines standardisierten Dateinamens der Einzelseiten-Dateien.

Eine weitere Automatisierung des erfindungsgemäßen Prozesses kann insbesondere dadurch erfolgen, daß der Speicherbereich für die Eingangsdateien in regelmäßigen Abständen, beispielsweise innerhalb einiger Sekunden, automatisch auf den Eingang neuer Dateien überprüft wird und daß überprüft wird, ob alle zu einem cluster gehörenden Dateien bereits vorhanden sind, so daß das Erstellen der zugehörigen Clusterdatei voll- oder teilautomatisch gestartet werden kann.

Zur Kontrolle der Eingangs- und/oder Clusterdateien ist es insbesondere vorteilhaft, die Anzeige des jeweiligen Dateiinhalts über ein entsprechendes Anzeigeprogramm zu ermöglichen. Als Datenformat für die Eingangsdateien und/oder die Clusterdateien eignen sich im Prinzip alle Dateiarten, die für Dokumentenwiedergabe geeignet sind, insbesondere jedoch Dateiformate, die relativ wenig Speicherplatz benötigen, wie z. B. das Format PDF. Es ist jedoch auch denkbar, die Erfindung mit speicheraufwendigeren Dateiformaten, wie beispielsweise gerasterte Bilddaten aufweisende "TIF"- oder "Bitmap" (BMP)-Daten zu verwenden.

Nachfolgend werden Ausführungsbeispiele der Erfindung beschrieben, anhand derer weitere Vorteile und Wirkungen der Erfindung deutlich werden.

Es zeigen:
- Figur 1:: ein standortübergreifendes Zeitungsproduktionssystem,
- Figur 2:: ein Druckvorverarbeitungssystem,
- Figur 3:: eine Anzeigemaske eines Druckvorverarbeitungs-Computerprogramm-Moduls,
- Figur 4:: die Maske der Figur 3, nach dem aus einzelnen Dateien verschiedene Clusterdateien erzeugt wurden,
- Figur 5:: die Maske der Figur 4, nach dem die Clusterdateien zu "PDF-Dateien" konvertiert wurden,
- Figur 6:: die Bildschirmanzeige einer konvertierten Clusterdatei,
- Figur 7:: ein Programm-Menü mit Überwachungsfenstern zur Erzeugung individuell definierter Clusterdateien,
- Figur 8:: die Anzeige des Computerprogramm-Moduls im vollautomatischen load,
- Figur 9:: ein Auswahlfenster zur Übertragung konvertierter Clusterdateien an ein Druckproduktionssystem,
- Figur 10:: die Auswahlmöglichkeit verschiedener vordefinierter Filter sowie verschiedener Programme zum Erzeugen der Clusterdateien und
- Figur 11:: ein Filter-Einstellmenü.

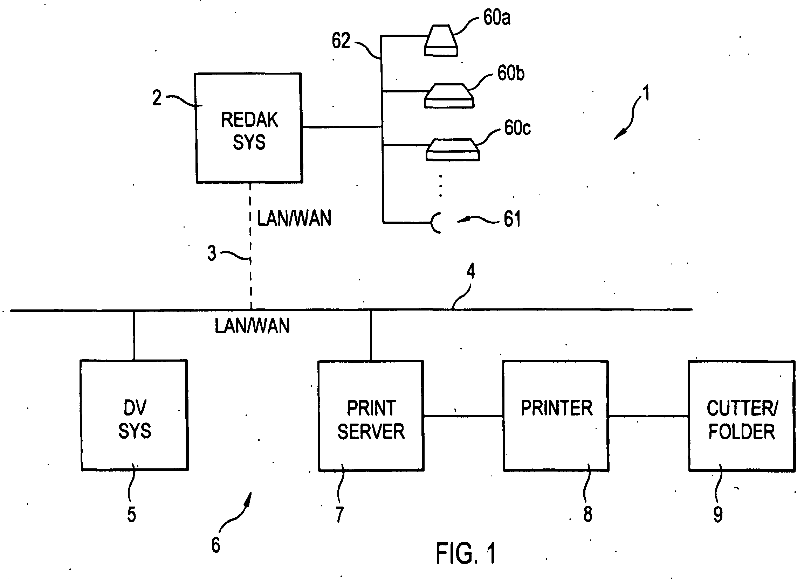

In Figur 1 ist ein Produktionssystem 1 für Zeitungen, Zeitschriften oder vergleichbare Dokumente gezeigt, in dem eine Vielzahl von Geräten miteinander vernetzt sind. Zeitungsredakteure erstellen an Anwendercomputern 60a, 60b, 60c usw., die an einem abgesicherten Netzwerk (LAN, WAN) 62 hängen, ihre Artikel. Weitere Artikel können über eine Schnittstelle 61 von beliebigen Standorten bzw. Datenquellen eingespielt werden. Ein Redaktionssystem 2, in dem die fertigen Zeitungsartikel seitenweise komponiert auf einzelnen Dateien ausgegeben werden, hängt an einem Datennetzwerk 3, mit dem diese Daten entweder lokal an einem gemeinsamen Standort (Local Area Network, LAN) oder standortübergreifend, insbesondere weltweit über ein geeignetes Netzwerk (Wide Area Network, WAN), wie das Internet zu anderen Computern übertragen werden kann. In einem Kompositionsmodul werden die verschiedenen Artikel zu Seiten der Zeitung zusammengefügt. Die im Redaktionssystem 2 erzeugten Einzelseiten-Dateien werden dann über das Netzwerk 3 an ein Druckvorverarbeitungssystem 5 überspielt. Dies kann entweder direkt an das Druckvorverarbeitungssystem 5 erfolgen oder - wie in Figur 1 gezeigt - über ein zweites Netzwerk 4, welches am Druckproduktionsstandort bzw. am Druckproduktionssystem 6 vorgesehen ist. Das zweite Netzwerk 4 kann dabei ebenfalls ein lokales Netzwerk (LAN) oder wiederum ein standortübergreifendes Netzwerk (WAN), z. B. das Internet, sein. Die drei Netzwerke 3, 4 und 62 können auch untereinander verbunden sein.

Die vom Redaktionssystem 2 erhaltenen Einzelseiten-Dateien werden im Druckvorverarbeitungssystem 5 zu Cluster-Dateien, die jeweils mehrere Einzelseiten umfassen, zusammengestellt. Die Cluster-Daten werden dann zu Signaturdaten konvertiert (Ausschieß-Vorgang), die Signaturdaten gedruckt und das dabei erzeugte Druckgut derart gefaltet und/oder geschnitten, daß im fertigen Dokument eine vorbestimmte Seitenreihenfolge, z.B. die Seitenreihenfolge "1, 2, 3 usw." erzeugt wird. Ein entsprechendes Druckproduktionssystem ist in der WO-A1-00/68877, insbesondere in den Figuren 1, 2 und 19 gezeigt, deren Inhalt hiermit nochmals expiziet in die vorliegende Beschreibung aufgenommen wird. Die Cluster enthalten z. B. jeweils ein ganzzahliges Vielfaches von 4 (vier) an Seiten, um in einem elektronischen Drucksystem, das jeweils Signaturen mit entsprechend ganzzahligen Vielfach von vier produziert, ausgedruck zu werden.

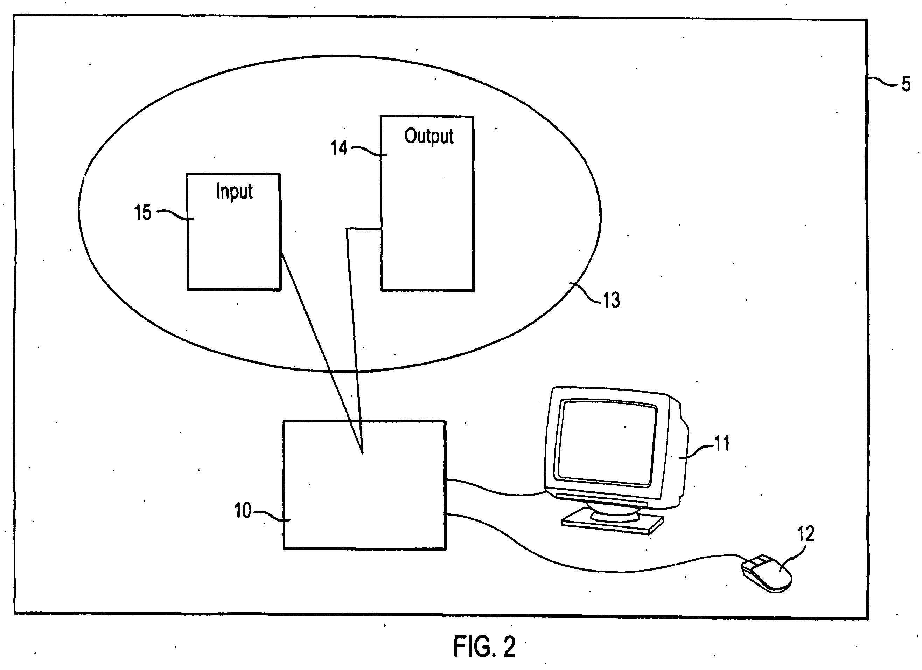

In Figur 1 sind Druckserver 7, Drucker 8 und Nachverarbeitungsgeräte 9 (Schneideeinrichtung, Falzeinrichtung) nur schematisch gezeigt. Das in WO-A1-00/68877 in den Figuren 2 bis 13 beschriebene Computerprogramm-Modul zum Erzeugen von Signaturen kann im vorliegenden System wahlweise im Druckvorverarbeitungssystem 5 oder auch im Druckserver 7 ablaufen.

In Figur 2 sind die wesentlichen Systemkomponenten des Druckvorverarbeitungssystems 5 gezeigt, mit dem aus den Einzeiseiten-Dateien, die vom Redaktionssystem 2 empfangen werden, eine Clusterdatei erzeugt wird.

Das Druckvorverarbeitungssystem 5 kann dazu als Computer (Personal Computer) ausgebildet sein, der eine zentrale Recheneinheit 10, eine Anzeigeeinrichtung (Monitor) 11 sowie ein Eingabemittel (Mouse) 12 aufweist. In einem Speicherbereich 13 werden die eingehenden Einzelseiten-Dateien in einem Eingabe-Speicherbereich 15 und die ausgehenden Clusterdateien in einem Ausgabe-Speicherbereich 14 gespeichert.

Innerhalb des Druckvorverarbeitungssystems läuft ein Computerprogramm-Modul ab, das den gesamten Verfahrensablauf steuert. Die einzelnen Seiten-Dateien werden als einseitige PDF-Dateien vom Redaktionssystem 2 an das Druckvorverarbeitungssystem 5 übertragen. Im Druckvorverarbeitungssystem 5 werden diese Dateien dann auf folgende Kriterien hin überprüft:
- Welche Dateien gehören zur aktuell zu bearbeitenden Zeitung
- Wie hoch ist die Anzahl der Seiten pro Zeitung
- Wie groß ist die Anzahl der Cluster (d. h. der Zeitungs-Signaturen)
- Wie groß ist der Seitenumfang innerhalb eines Clusters
- Sind alle Dateien eines Clusters vorhanden, d. h. ist der Cluster vollständig.

Wenn alle Prüfungen vorgenommen worden sind und die entsprechenden Parameter einer Zeitung, z.B. der Seitenumfang eines bestimmten Clusters, ermittelt sind, dann ist der Prüfungsvorgang beendet und der nächste Bearbeitungsschritt des Zusammenfügens von Dateien kann anhand des Kompositions-Programm-Moduls (Merge Program) folgen.

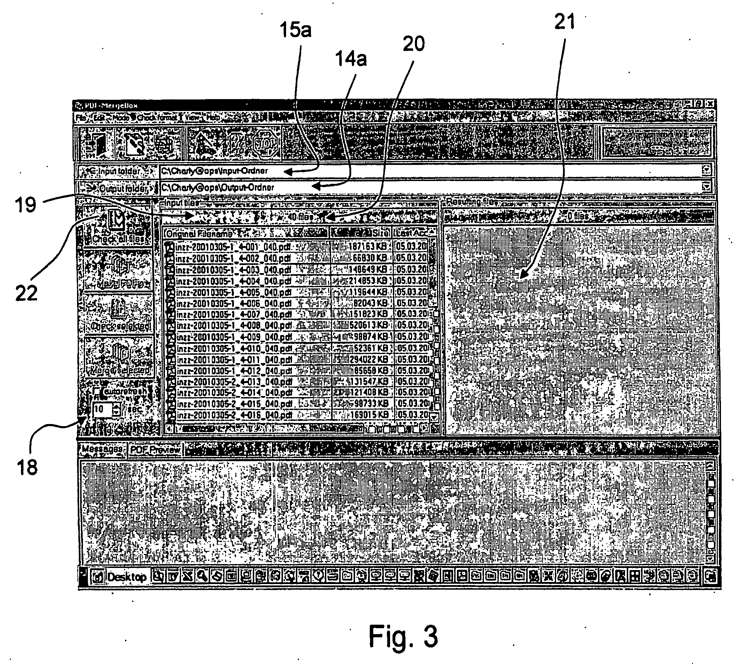

In Figur 3 ist die auf dem Monitor 11 erscheinende Bildanzeige dargestellt, die erscheint, wenn das Computerprogramm-Modul zum Zusammenfügen der einzelnen Seiten-Dateien zu Clusterdateien aufgerufen wird. In einer Anzeigezeile 15a wird der Eingangs-Speicherbereich angezeigt und in einer Anzeigezeile 14a wird der Ausgangsordner gezeigt. Im Eingangsfenster 20 sind alle Dateien angezeigt, die im Eingabe-Speicherbereich 15 vorliegen. Bei den in Figur 3 dargestellten Dateien ist dabei folgende Namenskonvention eingehalten:
nnnn-yyyymmdd-x_S-ZZZ-PPP.PDF
wobei gilt:
- nnnn =: Abkürzung des Zeitungsnamens (z. B. Internationale neue Züricher Zeitung = Inzz)
- yyyy =: Jahreszahl (hier 2001)
- mmdd =: Monat und Tag (hier 05. März), evtl.: 0305
- x =: Nummer des aktuellen Clusters
- S =: Gesamtzahl der Cluster
- ZZZ =: aktuelle Seiten-Nummer
- PPP =: Gesamtseitenzahl (hier 40).

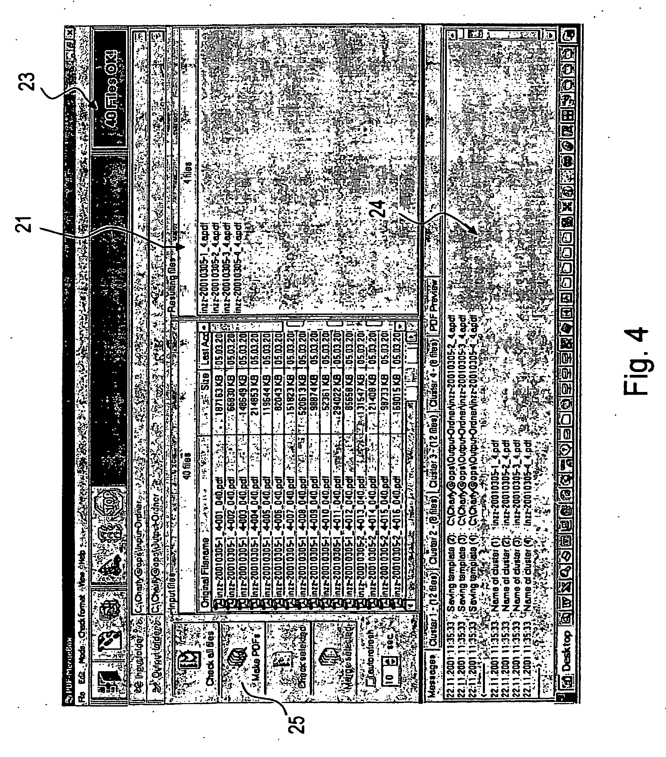

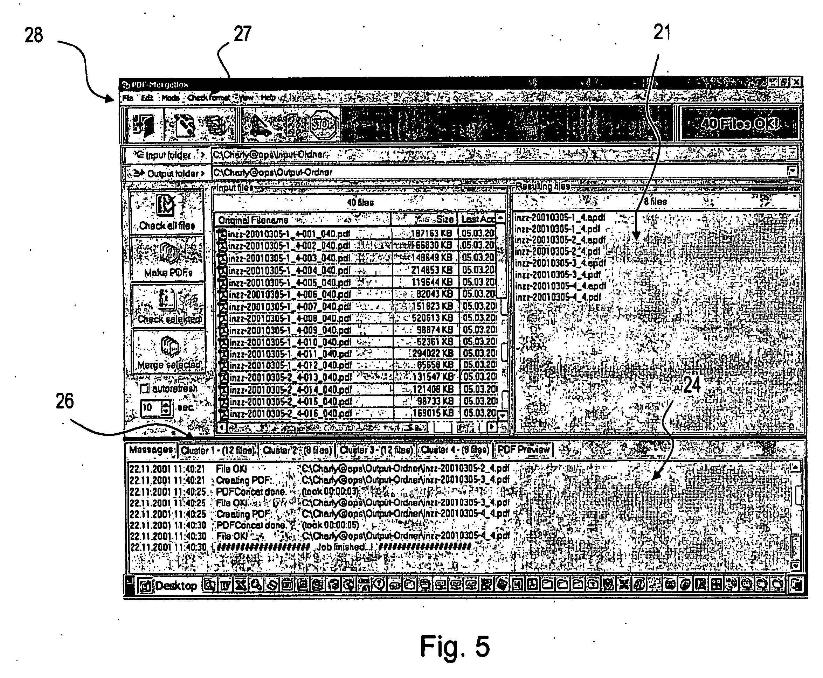

Mit der Prüfschaltfläche 22 werden die Dateien des Eingangsbereichs auf die oben genannten Kriterien hin überprüft, insbesondere auf die Vollständigkeit eines Clusters. Nach Betätigen der Schaltfläche 22 erscheint die in Figur 4 gezeigte Schaltfläche, wenn alle zur Zeitung gehörenden Dateien vollständig sind. Im Statusfenster 23 wird angezeigt, daß alle 40 Dateien in Ordnung sind. Im Ausgabefenster 21 sind vier "APDF"-Steuerdateien gezeigt, die durch den Prüfvorgang im Ausgabe-Speicherbereich 14 erzeugt wurden. Sie enthalten Steuerungsinformationen zum Bilden der Cluster wie z. B. Angaben über alle zum Cluster gehörenden Einzelseiten-Dateien (hier z.B. deren Dateiname) und/oder über den Soll-Speicherort der Clusterdateien. Im Meldungsfenster 24 sind der Prüfvorgang und die durchgeführten Operationen protokolliert. Um die "PDF"-Clusterdateien zu erzeugen, wird nunmehr die Schaltfläche 25 betätigt. Dies führt zur Anzeige, die in Figur 5 gezeigt ist. Im Meldungsfenster 24 werden dazu wieder Systemmeldungen ausgegeben. Alternativ dazu kann mit den Reitern 26 individuell betrachtet werden, welche Dateien des Eingangsbereiches 15 zum jeweiligen Cluster zusammengefügt wurden. Auf den Reitern ist jeweils angegeben, wie viele Dateien in dem betreffenden Cluster zusammengefaßt sind.

Das Verbinden der Einzeldateien zu einer einzigen PDF-Datei erfolgt über ein entsprechendes Kompositions-Programm-Modul (merge program module), das im Kommandozeilen-Modus arbeitet und über bestimmte Parameter vom Hauptprogramm-Modul (PDF-Merge Box) aufgerufen wird. Dazu kann zwischen zwei verschiedenen Kompositions-Programm-Modulen "PDFConcat" und "AppendPDF" ausgewählt werden. Diese beiden Programme unterscheiden sich hinsichtlich einiger Zusatz-Funktionen wie z.B. der Möglichkeit, integrierte Lesezeichen in einer PDF-Datei zu erhalten, den Arbeitsfortschritt anzuzeigen oder eine Protokolldatei (log file) über durchgeführte Operationen anzulegen.

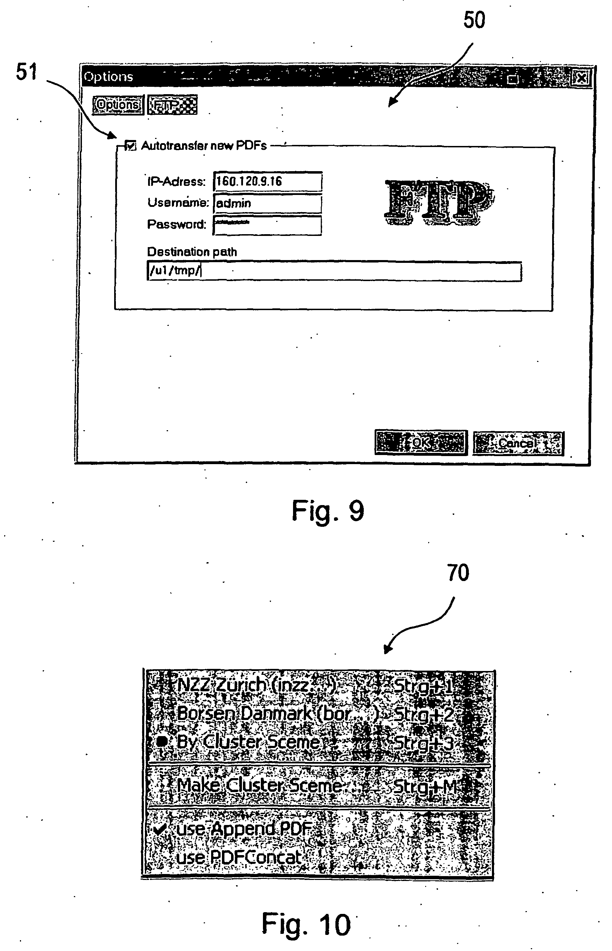

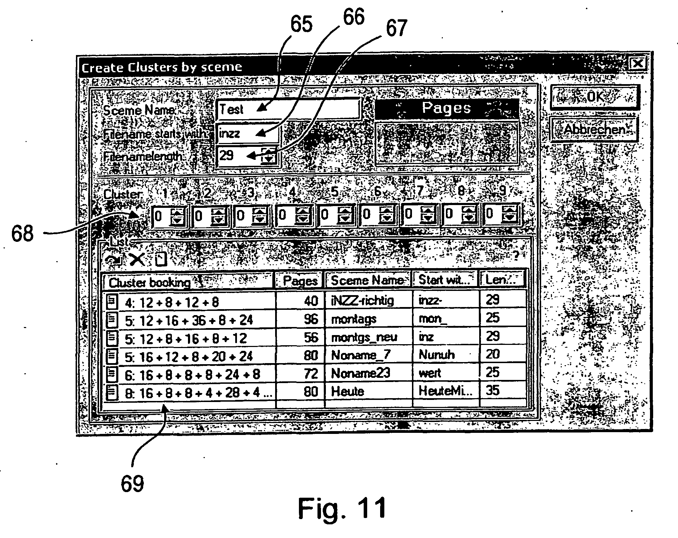

Die Auswahl erfolgt über den in der Menüleiste 28 angegebenen Menüpunkt 27 "Check format". Das zugehörige Auswahlmenü 70 ist in Figur 10 nochmals gesondert gezeigt. Darin sind einige vordefinierte Filter-Formate für verschiedene Zeitungen auswählbar, beispielsweise das Filterformat "inzz" für die Internationale Neue Züricher Zeitung oder das Filterformat "BOR" für die Zeitung Borsen Danmark. Alternativ dazu kann über den Menüpunkt "By Cluster Scheme" eine Auswahl aus einer Gruppe von Filtern getroffen werden. Über den Menüpunkt "Make Cluster Scheme" wird das in Figur 11 gezeigte Menü aufgerufen, womit weitere Filter definiert werden können.

Innerhalb des Eingangsfensters 20 wird in der obersten Zeile 19 die Anzahl der aktuell im Eingabe-Speicherbereich 15 gespeicherten Dateien angezeigt. Im Beispiel der Figur 3 sind dies 40 Dateien mit je einer Seite. Wie anhand der Datei-Nomenklatur der Eingangsdateien zu erkennen ist, besteht die gesamt Zeitung aus exakt 40 Seiten (vgl. die letzte Zahl des Dateinamens vor der Endung "PDF") . Im angezeigten Fall sind also alle Dateien bereits eingetroffen. Um die Dateiliste beim Eintreffen neuer Dateien automatisch zu aktualisieren, kann im Eingabefenster 18 (autorefresh) ein Haken gesetzt und die Zeitabstände zwischen den einzelnen Aktualisierungsvorgängen sekundengenau eingestellt werden.

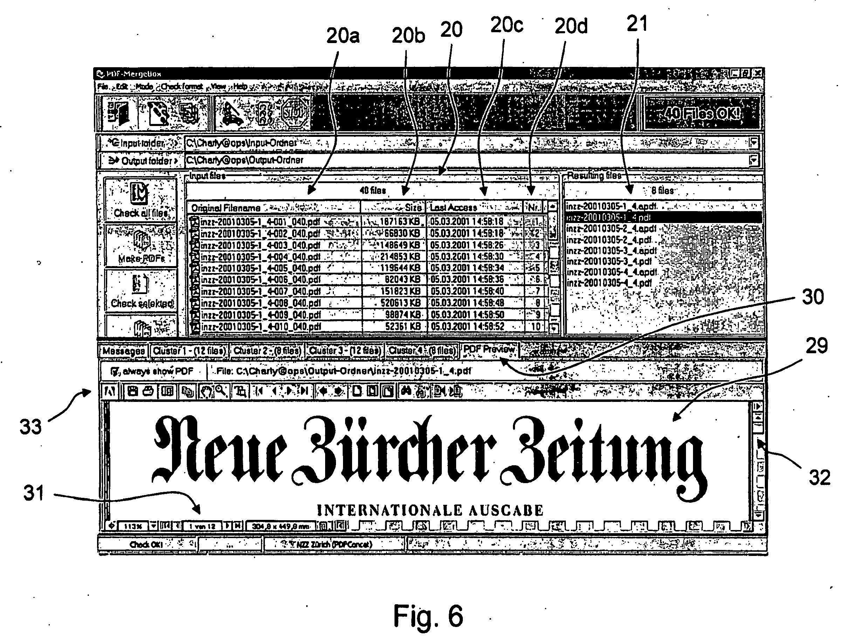

In Figur 6 ist nochmals das Eingangsfenster 20 sowie das Ausgangsfenster 21 gezeigt. Das Eingangsfenster 20 ist dabei in vier Spalten aufgeteilt, Spalte 20a bezeichneten Namen der jeweiligen Eingangsdateien, in Spalte 20b ist ihre Größe in Kilobyte angegeben, in Spalte 20c Datum und Uhrzeit des letzten Zugriffs und in Spalte 20d ist eine laufende Nummer bezüglich des Eingangs-Speicherbereichs 15 angegeben.

Weiterhin ist zu erkennen, daß im Ausgangsfenster die Clusterdatei "inzz-20010305-1_4.pdf" ausgewählt, d.h. schwarz hinterlegt, ist. Der Inhalt wird im Anzeigefenster 29 angezeigt, das durch Auswählen des Reiters 30 "PDF Preview" ermöglicht wurde. Die Auswahl dieses Reiters 30 startet ein entsprechendes Anzeigeprogramm, hier zum Beispiel das Programm Acrobat Reader® der Firma Adobe, dessen Anzeige dann dem Meldungsfenster 24 überlagert wird. Im Seitenanzeige-Bereich 31 ist abzulesen, daß von den 12 Seiten, die die Datei "inzz-20010305-1_4.pdf" aufweist, die erste Seite ausgewählt ist. Mit dem Schieber 32 kann innerhalb dieser Seite bzw. innerhalb der 12 Seiten des Dateiinhalts gescrollt werden. Im übrigen sind die an sich bekannten Funktionen des Acrobat Reader-Anzeigeprogramms über die Acrobat-Menüzeile 32 nutzbar, wie Speichern, Ausdrucken, geteilte Darstellung, Vergrößerung, Suchen eines Textes usw..

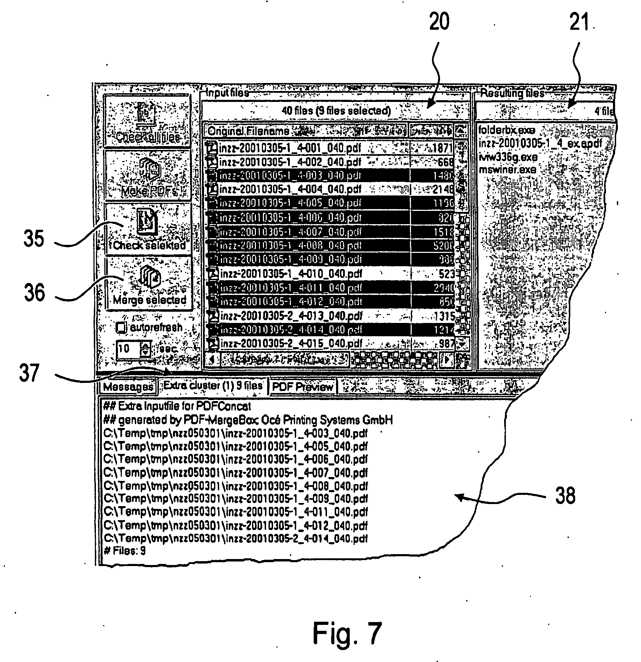

In Figur 7 ist ein durch das Computerprogramm unterstützter Programmablauf anhand der zugehörigen Anzeigefenster dargestellt. In diesem Anzeigemodus können im Eingabefenster 20 einzelne Dateien in beliebiger Kombination zur Bildung einer frei bestimmbaren Anzahl von Clusterdateien ausgewählt werden. Die ausgewählten Dateien sind in diesem Fall schwarz unterlegt. Im gezeigten Beispiel sind neun Dateien ausgewählt. Diese Dateien können mit der Prüf-Schaltfläche 35 auf ihre Konsistenz bezüglich Namenskonvention und/oder anderer Konventionen überprüft werden. Anhand eines nicht dargestellen Anzeigefensters kann festgelegt werden, wie viele Clusterdateien erzeugt werden sollen. Im gezeigten Beispiel der Figur 7 wird nur eine Clusterdatei festgelegt, was anhand des einzigen Cluster-Reiters 37 zu erkennen ist. Im Cluster-Anzeigefenster 38 werden alle neun für den Extra-Cluster ausgewählten Dateien nochmals angezeigt.

Das Bilden einer einzigen, individuell zusammengestellten Clusterdatei ist z.B. dann vorteilhaft, wenn eine Clusterdatei den Druckvorgängen der übrigen Clusterdateien vorausgehen soll oder wenn eine bereits gelöschte Clusterdatei nochmals nachproduziert werden soll.

Um ggf. festzulegen, in welchen der individuell erzeugten Cluster eine Gruppe selektierter Dateien aufzunehmen ist, werden die selektierten Dateien mit der sogenannten Drag & Drop-Technik vom Eingangsfenster 20 in das entsprechende Cluster-Anzeigefenster 38 verschoben, d.h. bei gedrückter, linker Maustaste in das entsprechende Cluster-Anzeigefenster bzw. die entsprechende Clusterliste gezogen. Dadurch werden die Dateinamen bzw. die entsprechenden Dateien einschließlich ihres Pfades an der richtigen Stelle in dieser Liste eingefügt, nämlich alphabetisch und numerisch sortiert. Um Dateieinträge wieder zu entfernen, werden die entsprechenden Dateien markiert und durch eine Lösch-Operation aus der Clusterliste gelöscht. Die in der Clusterliste gelöschte Datei erscheint dann wieder in der Liste der Eingangs-Dateien im Anzeigefenster 20. Durch Betätigen der Kombinations-Schaltfläche 36 werden diese neuen Einzelseiten-Dateien zu einer einzigen Cluster-Datei zusammengeführt und die dabei erzeugte Datei im Anzeige-Fenster 21 dargestellt. Im Ausgangs-Speicherbereich wird außerdem eine entsprechende Steuer-Datei mit der Endung "APDF" erzeugt und im AusgangsFenster 21 dargestellt.

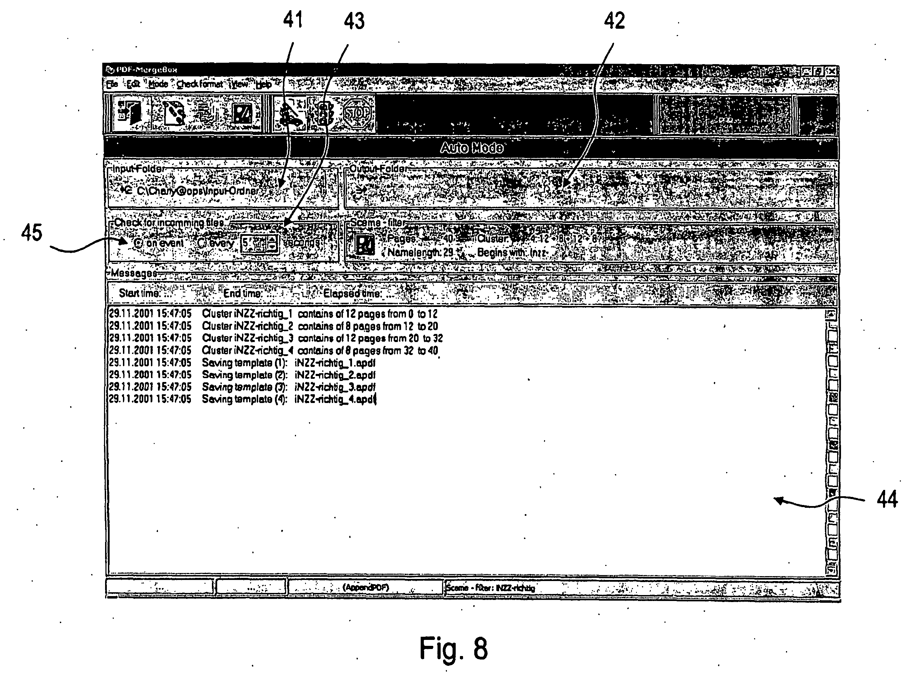

Anhand der Figur 8 wird nunmehr ein vollständig automatisierter Bearbeitungsprozeß veranschaulicht. Diese vollautomatische Betriebsweise ist für ein unbeaufsichtigtes Kontrollieren eingehender Dateien vorgesehen. Die eingehenden Dateien müssen dabei exakt einem vorgegebenen Kriterium entsprechen, wie z. B. einem bestimmten Namens-Format oder auch mittels zusätzlicher, in der Datei oder mit einer Zusatzdatei bereitgestellter Steuerinformationen. Durch entsprechende Suchmechanismen, insbesondere Filtern, die dem Dateinamen entsprechen, kann der Prozeß dann vollautomatisiert werden. In Figur 8 ist dabei erkennbar, daß - wie bereits in den oben beschriebenen teilautomatischen Betriebsweise - ein Eingangsordner in der Menüzeile 41 festgelegt werden muß, sowie in Ausgangs-Ordner in der Menüzeile 42. Weiterhin kann wahlweise im Menüpunkt 43 ein Zeitintervall in Sekunden eingeben werden, in dem der Eingangsordner jeweils auf neue Dateien überprüft wird oder über den Menüpunkt 45 angegeben werden, daß die Automatik-Aktionen für Dateiüberprüfung und Clusterbildung jeweils beim Eintreffen neuer Dateien im Eingangs-Verzeichnis erfolgt.

Wenn zu einem vorgegebenen Auftrag (z. B. zur Produktion einer vollständigen Zeitung) alle Dateien übermittelt, überprüft und vollständig in alle entsprechenden Cluster-Dateien zusammengefügt sind, erscheint ein Hinweisfenster "Prozess beendet" und/oder die Clusterdateien werden automatisch an ein Druckproduktionssystem zum signaturenweisen Ausdrucken gesandt. Der automatische Überwachungsprozeß wird ebenfalls automatisch abgeschaltet, sobald alle Automatik-Operationen vollzogen sind. Die jeweils durchgeführten Arbeitsprozeßschritte werden im Anzeigefenster 42 in Form von Systemmeldungen dargestellt.

Im Menüfeld 46 kann ein vordefinierter Filter ausgewählt werden, der in der vollautomatischen Betriebsweise eingesetzt wird, siehe auch Figur 11. Im Beispiel der Figur 8 werden alle Dateien, deren Name mit "inzz-" beginnt und insgesamt 29 Zeichen lang ist, untersucht. Das gesamte Dokument hat 40 Seiten und ist in vier Cluster unterteilt, deren Seitenumfang zwölf, acht, zwölf und acht Seiten beträgt, vgl. den Filter "inzz-richtig" der Figur 11.

In Figur 9 ist ein Anzeigefenster 50 dargestellt, mit dem ein vollständiger Satz von Cluster-Dateien als Druckauftrag an ein Druckproduktionssystem, z. B. an ein Druckverarbeitungsprogramm des Druckservers 7 (vgl. Figur 1) gesandt werden kann. Damit läßt sich der Druckauftrag zu einer Zeitung bzw. zu einer Broschüre vollständig auf einen Drucker in beliebiger Auflage erzeugen. Einzugeben sind lediglich die IP-Adresse des Druckservers, ein zugelassener Benutzername sowie dessen Paßwort und ein bestimmter Zielpfad innerhalb des Druckservers 7. Diese Eingaben können in entsprechenden Eingabefeldern, die im Anzeigefenster 50 gezeigt sind, erfolgen. Über eine Option "Autotransfer" 51 ist es auch möglich, vollständige Cluster-Dateisysteme direkt an den Druckserver zu übermitteln, so daß auch dieser Produktionsschritt vollautomatisiert ist. Der Dateitransfer kann mit einem an sich bekannten Datenprotokoll erfolgen, wie z.B. FTP (file transfer protocol), TCP/IP (Transmission Control Protocol/Internet Protocol) oder auch einem geeigneten anderen Protokoll.

In Figur 11 ist ein Auswahlmenü gezeigt, mit dem die Filtereinstellungen zur Überprüfung von Eingangsdateien und zur Bildung der Clusterdateien festgelegt werden können. Im Eingabefeld 65 ist dabei ein Name für den jeweiligen Filter einzugeben und im Eingabefeld 66 anzugeben, mit welcher Bezeichnung die jeweiligen Eingangsdateien einer bestimmten Zeitung beginnen (z. B. Inzz für Internationale neue Züricher Zeitung). Im Eingabfeld 67 ist die Gesamtlänge der Eingangdatei-Bezeichnungen anzugeben, im Beispiel der Internationalen neuen Züricher Zeitung (vgl. Figuren 3 - 5) sind dies 29 Zeichen. In dem Einstellungsfenster 68 sind für bis zu neun Cluster die Gesamtseitenzahlen der jeweiligen Cluster einzugeben. Im Fenster 69 sind entsprechende Angaben für bereits vordefinierte Filterschemen zu entnehmen. Beispielsweise ist der Filter mit dem Namen "Inzz-Richtig" in vier Cluster unterteilt, von denen der erste Cluster 12 Seiten enthält, der zweite Cluster 8 Seiten, der dritte Cluster 12 Seiten und der vierte Cluster wiederum 8 Seiten. Daraus ist zu erkennen, daß die Seitenanzahl der Cluster jeweils ein ganzzahliges Vielfaches von vier ist.

Es wurde ein System beschrieben, mit dem Produktionsprozesse zur Herstellung von Broschüren und Zeitungen weitgehend automatisierbar sind, so daß diese mit hoher Geschwindigkeit cluster- bzw. signaturenweise auf einem Drucksystem ausgegeben werden können. Das System ist insbesondere dazu geeignet, verschiedene Produktionsschritte des Gesamtprozesses über große Distanzen hinweg, insbesondere über ein weltweites Netz hinweg, dezentral derart durchzuführen, daß am Ende der Produktionskette das Drucken an einem beliebigen Standort der Welt, mit höchster Geschwindigkeit durchgeführt werden kann. Dadurch ist es möglich, weltweit Zeitungen zeitaktuell, d. h. nur kurze Zeit (wenige Sekunden bis Stunden) nach der Fertigstellung bei einer Redaktion an beliebigen Standorten auszudrucken.

Durch die Erfindung können.verschienene Produktionsschritte beim Erstellen eines Dokuments auf verschiedene Produktionsorte aufgeteilt werden und ist insbesondere möglich, in einem Netzwerk von Computern die Produktionsschritte standortindividuell auszuführen. Somit kann die Erfindung sowohl in entsprechenden Computerprogramm-Modulen, in Computerprogramm-Produkten wie z. B. CD-ROMS, in Form von Dateien oder auch auf Gerätesystemen realisiert werden. Sie sind insbesondere als Computersoftware ausführbar, die auf an sich bekannten Computersystemen ablaufen können.

Die Erfindung kann beliebig weiterentwickelt und in verschiedenen Auführungsformen verwirklicht werden. Beispielsweise spielt es keine Rolle, auf welchem Betriebssystem die einzelnen Programmabschnitte laufen. Insbesondere ist es möglich, verschiedene Computer mit verschiedenen Betriebssystemen derart zu vernetzen, daß der Produktionsablauf gemäß der vorliegenden Erfindung ermöglicht wird. Weiterhin können statt Einzelseiten auch jeweils eine vorgegebene Anzahl von Seiten pro Seiten-Datei vom Redaktionssystem an das Druckvorverarbeitungssystem übertragen werden.

Zusammenfassend kann nochmals festgestellt werden, daß es mit der Erfindung ermöglicht wird, Broschürenseiten, die als Einzelseiten über bestimmte Zeiträume verteilt geliefert werden, in Gruppen zusammenzufassen. Dazu werden die Eingangsdateien auf bestimmte Kriterien hin untersucht und überprüft. Um die Produktion der Zeitung innerhalb eines engen Zeitfensters zu ermöglichen, wird durch die Erfindung ein zumindest teilautomatisches Arbeitsverfahren vorgeschlagen, mit dem die Überprüfung weitestgehend automatisiert ist. Um dies auch für Dateien zu ermöglichen, die neue oder andere oder auch gar keine Konventionen hinsichtlich ihres Namens und/oder Informationen über den Umfang von Clustern bzw. Signaturen haben, ist auch eine manuelle Zusammenfassung von Eingangsdaten zu individuell gestalteten Clustern möglich.

Durch die Verwendung von Namenskonventionen ist es möglich, Filtersysteme anzugeben, anhand derer die notwendigen Überprüfungen der Dateien automatisch erfolgen können. Eine weitergehende Automatisierung des Arbeitsprozesses ist erreichbar, wenn eine automatische Zusammenstellung der Cluster (Dateigruppen) erfolgt. Dadurch kann bei Einhaltung der Namenskonventionen ein automatisches, unbeaufsichtigtes Überprüfen der Eingangsdateien und Zusammenstellen der Clusterdateien erfolgen. Weiterhin kann eine automatische Übertragung der Ergebnisdateien (Clusterdateien) zu einem Druckproduktionssystem derart vorgesehen sein, daß aus den Clusterdateien Signaturdaten gebildet werden. Die Signaturdaten sind an das Drucksystem bzw. an das Druck-Nachverarbeitungssystem wie z.B. an Falt- und Schneideeinrichtungen so angepaßt, dass das fertig produzierte Dokument eine vorgegebene Seitenreihenfolge aufweist.

Durch die Erfindung ist eine erhebliche Zeitersparnis beim dezentralen Drucken von Zeitungen erreicht, sowie ein sicherer Workflow bei der Erstellung von Zeitungen an dezentralen Standorten. Dabei sind zwei Betriebsweisen vorgesehen, nämlich ein sogenannter interaktiver Modus, bei dem folgende Bearbeitungsschritte teilautomatisiert unterstützt werden:
- Überprüfen und verknüpfen von Seiten-Dateien anhand eines eingestellten Filters
- Erstellen individueller Cluster und Zuordnung der Dateien per Drag&Drop
- Verknüpfen ausgewählter Seiten-Dateien in einem individuell definierten Cluster
- Vorschau der Seiten-Dateien und der Cluster-Dateien
- Ausgabe von Meldung zu jedem Verarbeitungsschritt
- Anzeigen von allgemeinen Dateiinformationen zur besseren Kontrolle der Dateien
- Automatisches Neulesen der eingestellten Verzeichnisse

In einem vollautomatischen Betriebsmodus werden die eingestellten Verzeichnisse automatisch auf den Eingang neuer Dateien gelesen, anhand des eingestellten Filters die Eingangs-Dateien überprüft und die Clusterdateien automatisch erzeugt, wenn alle zu diesem Cluster gehörenden Eingangs-Dateien vorhanden sind und ggf. an ein Druckproduktionssystem zum Erstellen und Drucken der zugehörigen Signaturen weitergeleitet.

### Bezugszeichenliste

- 1: Zeitungsproduktionssystem
- 2: Redaktionssystem
- 3: Erstes Netzerk
- 4: Zweites Netzwerk
- 5: Druckvorverarbeitungssystem
- 6: Druckproduktionssystem
- 7: Druckserver
- 8: Drucker
- 9: Schneide- und/oder Faltgerät
- 10: Recheneinheit
- 11: Monitor
- 12: Maus
- 13: Speicher
- 14: Ausgabe-Speicherbereich
- 14a: Anzeige des Ausgabe-Speicherbereichs
- 15: Eingabe-Speicherbereich
- 15a: Anzeige des Eingangsspeicherbereichs
- 18: "autorefresh"-Eingaben
- 19: Zeile des Eingabefensters 20
- 20: Eingangsfenster
- 21: Ausgangsfenster
- 22: Prüf-Schaltfläche
- 23: Statusfenster
- 24: Meldungsfenster
- 25: Cluster-Schaltfläche
- 26: Reiteranzeige
- 27: Check-Format-Menüpunkt
- 28: Menüleiste
- 29: Anzeigefenster
- 30: PDF-Preview-Reiter
- 31: Seitenanzeige-Bereich
- 32: Schieber
- 33: Acrobat-Menüleiste

- 35: Prüf-Schaltfläche
- 36: Kombinations-Schaltfläche
- 37: Extra-Cluster-Reiter
- 38: Cluster-Anzeigefenster

- 41: Menüzeile für Eingangsordner
- 42: Menüzeile für Ausgangsordner
- 43: Menüpunkt für Überprüfungszeit
- 44: Meldungsfenster
- 45: Menüpunkt für die Überprüfung bei Dateieingang

- 50: Anzeigefenster für Dateitransfer
- 51: Autotransfer-Schaltfläche

- 60: a,b,c ... Redaktions-Computer
- 61: Schnittstelle
- 62: Drittes Netzwerk

- 65: Filter-Namensfeld
- 66: Datei-Anfangsfeld
- 67: Datei-Längenfeld
- 68: Cluster-Größenfeld
- 69: Filter-Übersichtsfenster
- 70: Auswahlmenü

## Patentansprüche

1. Verfahren zum Erzeugen eines gedruckten Dokuments aus mehreren Dateien, die jeweils Daten für eine vorgegebene Anzahl von Seiten enthalten, wobei
- die Dateien von einem Druckvorbearbeitungssystem (5) empfangen werden.
- die Dateien als Eingangsdateien in einem logischen Eingangs-Speicherbereich (15) des Druckvörbearbeitungs,systems abgelegt werden, **dadurch gekennzeichnet,**
**dass** mittels eines Prüfprogramm-Moduls automatisch festgestellt wird, welche Eingängsdateien jeweils zu einer mehrere Eingangsdateien zusammenfassenden Clusterdatei zu verbinden sind,
**dass** mittels eines Kombinationsprogramm-Moduls aus den zugeordneten Eingangsdateien automatisch die Clusterdatei erstellt und in einem logischen Clusterspeicherbereich abgelegt wird, und
**dass** automatisch überprüft wird, ob alle zu einer Clusterdatei gehörenden Dateien bereits vorhanden sind und gegebenenfalls die Clusterdatei zur Ausgabe als Signatur auf einem Druckgerät automatisch weitergeleitet wird.

2. Verfahren nach Anspruch 1, wobei eine Vielzahl von Eingangsdateien übertragen wird.

3. Verfahren nach Anspruch 2, wobei jede Eingangsdatei genau einer Druckseite entspricht.

4. Verfahren nach einem der vorhergehenden Ansprüche, wobei aus jeder Clusterdatei genau eine Druck-Signatur erzeugt wird.

5. Verfahren nach Anspruch 4, wobei die Signatur in einem Druckproduktionssystem (6) erzeugt wird.

6. Verfahren nach einem der vorhergehenden Ansprüche, wobei aus der Clusterdatei eine Druckdatei in einer vorgegepenen Sprache wie beispielsweise PS, PCL, AFPDS, IPDS, LCDS erstellt wird.

7. Verfahren nach Anspruch 6, wobei die Druckdatei mehrere Druck-Signaturen umfaßt.

8. Verfahren nach einem der vorhergehenden Ansprüche, wobei ein Filter automatisch angewandt wird, durch den die Clusterdateien nach vorgegebenen Konventionen erstellt werden.

9. Verfahren nach einem der vorhergehenden Ansprüche, wobei mit einem Festlegungs-Modul festgelegt wird, welche Eingangs-Dateien zu einer Signatur zu verbinden sind und dann der Prüfungsschritt durch das Prüfprogramm-Modul erfolgt.

10. Verfahren nach einem der vorhergehenden Ansprüche, wobei die Eingangsdateien wenigstens auf eines der folgenden Kriterien geprüft wird:
- welche Datei gehört zu einer dem aktuell aktivierten Filter entsprechenden Zeitung
- wie groß ist die Seitenanzahl der Zeitung
- wie groß ist die Anzahl der Cluster
- wie groß ist der Seitenumfang eines Clusters
- sind alle Dateien eines Clusters vorhanden.

11. Verfahren nach einem der vorhergehenden Ansprüche, wobei Eingangsdateien in einer manuellen Betriebsweise per drag&drop einem Cluster zugeordnet werden.

12. Verfahren nach einem der vorhergehenden Ansprüche, wobei in einem vollautomatischen Betriebsmodus anhand eines Filters automatisch und regelmäßig überprüft wird, ob im Eingangsdaten-Speicherbereich alle Eingangsdateien für alle Cluster einer Broschüre vorhanden sind, die Eingangsdateien automatisch hinsichtlich ihrer Konsistenz mit dem Filter überprüft und die Clusterdateien dann ohne Benutzereingriff, automatisch gebildet werden.

13. Verfahren nach Anspruch 12, wobei die Clusterdateien automatisch, insbesondere zusammen mit Signaturen-Informationen, an ein Druckproduktionssystem übertragen werden, in dem aus den Clusterdateien Signatur-Druckdaten gebildet werden.

14. Verfahren nach einem der vorhergehenden Ansprüche, wobei die Eingangsdateien und/oder die Clusterdateien mittels eines Betrachtungsprogramms, das direkt von dem Cluster-Erzeugungsprogramm aufgerufen wird, betrachtet werden.

15. Verfahren nach einem der vorhergehenden Ansprüche, wobei zunächst Druckdateieri erstellt werden.

16. Verfahren nach einem der vorhergehenden Ansprüche, wobei in den Eingangsdateien Informationen über das Gesamtdokument enthalten sind.

17. Verfahren nach Anspruch 16, wobei die Informationen im Dateinamen enthalten sind.

18. Verfahren nach einem der Ansprüche 1 bis 15, wobei in einer Begleitdatei Informationen über das Gesamtdokument enthalten sind.

19. Verfahren nach einem der Ansprüche 16 bis 18, wobei die Informationen Informationen über die gesamte Seitenzahl, über den Umfang der Seiten eines Clusters und/oder über eine Signatur umfassen.

20. Gerätesystem (1) mit Mitteln, die zum Durchführen eines Verfahrens nach einem der vorhergehenden Ansprüche eingeichnet sind.

21. Gerätesystem nach Anspruch 20, umfassend mindestens einen Computer mit einem Netzwerkanschluß und ein mit dem Computer (5) mittelbar oder unmittelbar verbundenes Druckgerät (8).

22. Computerprogramm-Produkt, das beim Laden und Ausführen auf einem Computer das Verfahren gemäß einem der Ansprüche 1 bis 19 ausführt.

## Revendications

1. Procédé de génération d'un document imprimé à partir de plusieurs fichiers qui contiennent chacun des données destinées à un nombre prédéterminé de pages, dans lequel
- les fichiers sont reçus par un système de prétraitement d'impression (5),
- les fichiers sont mémorisés en tant que fichiers d'entrée dans une zone de mémoire d'entrée logique (15) du système de prétraitement d'impression,
**caractérisé en ce que**
on détermine automatiquement, au moyen d'un module de programme de test, quels fichiers d'entrée doivent être liés à chaque fois à un fichier de regroupement regroupant plusieurs fichiers d'entrée,
le fichier de regroupement est automatiquement constitué à partir des fichiers d'entrée associés au moyen d'un module de programme de combinaison, et est mémorisé dans une zone de mémoire de regroupement logique, et
on vérifie automatiquement si tous les fichiers appartenant à un fichier de regroupement sont déjà présents, et le cas échéant si le fichier de regroupement est transmis automatiquement à un appareil d'impression pour l'édition comme signature.

2. Procédé selon la revendication 1, dans lequel un grand nombre de fichiers d'entrée est transmis.

3. Procédé selon la revendication 2, dans lequel chaque fichier d'entrée correspond précisément à une page d'impression.

4. Procédé selon l'une des revendications précédentes, dans lequel une seule signature d'impression est générée à partir de chaque fichier de regroupement.

5. Procédé selon la revendication 4, dans lequel la signature est générée dans un système de production d'impression (6).

6. Procédé selon l'une des revendications précédentes, dans lequel un fichier d'impression est élaboré dans un langage prédéterminé comme par exemple PS, PCL, AFPDS, IPDS, LCDS, à partir du fichier de regroupement.

7. Procédé selon la revendication 6, dans lequel le fichier d'impression comporte plusieurs signatures d'impression.

8. Procédé selon l'une des revendications précédentes, dans lequel on utilise automatiquement un filtre qui permet d'élaborer les fichiers de regroupement selon des conventions prédéterminées.

9. Procédé selon l'une des revendications précédentes, dans lequel on détermine, au moyen d'un module de détermination, quels fichiers d'entrée doivent être liés à une signature, puis on réalise l'étape de test au moyen du module de programme de test.

10. Procédé selon l'une des revendications précédentes, dans lequel les fichiers d'entrée sont vérifiés en se fondant sur au moins l'un des critères suivants :
- quel est le fichier qui appartient à un journal correspondant au filtre actuellement activé,
- quelle est la dimension du nombre de pages du journal,
- quelle est la dimension du nombre de regroupements,
- quelle est le volume des pages dans un regroupement,
- les fichiers d'un regroupement sont-ils tous présents.

11. Procédé selon l'une des revendications précédentes, dans lequel des fichiers d'entrée sont associés à un regroupement dans un mode de fonctionnement manuel drag&drop (glisser-déplacer).

12. Procédé selon l'une des revendications précédentes, dans lequel, dans un mode de fonctionnement entièrement automatique, on vérifie automatiquement et régulièrement en se fondant sur un filtre si tous les fichiers d'entrée de tous les regroupements d'une brochure sont présents dans la zone de mémoire de données d'entrée, on vérifie automatiquement la consistance des fichiers d'entrée avec le filtre, et on forme automatiquement les fichiers de regroupement sans intervention de l'utilisateur.

13. Procédé selon la revendication 12, dans lequel les fichiers de regroupement sont transmis automatiquement, en particulier conjointement avec des informations de signature, à un système de production d'impression dans lequel des données d'impression de signature sont formées à partir des fichiers de regroupement.

14. Procédé selon l'une des revendications précédentes, dans lequel les fichiers d'entrée et/ou les fichiers de regroupement sont observés au moyen d'un programme d'observation qui est appelé directement par le programme de génération de regroupements.

15. Procédé selon l'une des revendications précédentes, dans lequel on élabore tout d'abord des fichiers d'impression.

16. Procédé selon l'une des revendications précédentes, dans lequel des informations sur tout le document sont contenues dans les fichiers d'entrée.

17. Procédé selon la revendication 16, dans lequel les informations sont contenues dans les noms de fichier.

18. Procédé selon l'une des revendications 1 à 15, dans lequel des informations sur tout le document sont contenues dans un fichier d'accompagnement.

19. Procédé selon l'une des revendications 16 à 18, dans lequel les informations contiennent des informations sur le nombre total de pages, sur le volume des pages d'un regroupement et/ou sur une signature.

20. Système d'appareil (1) comportant des moyens qui sont destinés à mettre en oeuvre un procédé selon l'une des revendications précédentes.

21. Système d'appareil selon la revendication 20, comportant au moins un ordinateur (5) doté d'une borne de réseau, et un appareil d'impression (8) relié directement ou indirectement à l'ordinateur (5).

22. Logiciel qui met en oeuvre le procédé selon l'une des revendications 1 à 19 lors du chargement et de l'exécution sur un ordinateur.

## Claims

1. Method to generate a printed document from a plurality of files that respectively comprise data for a predetermined number of pages, wherein
- the files are received by a print pre-processing system (5),
- the files are stored as input files in a logical input storage region (15) of the print pre-processing system, **characterized in that**
by means of a test program module, it is automatically determined which input files are respectively to be joined into a cluster file comprising a plurality of input files,
by means of a combination program module, the cluster file is automatically created from the associated input files and is stored in a logical cluster storage region, and
it is automatically tested whether all files belonging to a cluster file are already present, and as necessary the cluster file is automatically forwarded to a print device for output as a signature.

2. Method according to claim 1, wherein a plurality of input files is transferred.

3. Method according to claim 2, wherein each input file corresponds to precisely one print page.

4. Method according to one of the preceding claims, wherein precisely one print signature is generated from each cluster file.

5. Method according to claim 4, wherein the signature is generated in a print production system (6).

6. Method according to one of the preceding claims, wherein a print file is created from the cluster file in a predetermined language such as PS, PCL, AFPDS, IPDS, LCDS.

7. Method according to claim 6, wherein the print file comprises a plurality of print signatures.

8. Method according to one of the preceding claims, wherein a filter is automatically applied, via which the cluster files are created according to predetermined conventions.

9. Method according to one of the preceding claims, wherein it is determined with a determination module which input files are to be connected to a signature, and the testing step then ensues via the test program module.

10. Method according to one of the preceding claims, wherein the input files are checked for at least one of the following criteria:
- which file belongs to a newspaper corresponding to the currently activated filter,
- how large is the number of pages of the newspaper,
- how large is the number of the clusters,
- how large is the page range within a cluster,
- are all files of a cluster present.

11. Method according to one of the preceding claims, wherein input files are associated with a cluster in a manual operating mode via drag & drop.

12. Method according to one of the preceding claims, wherein, in a fully automatic operating mode, it is automatically and regularly tested using a filter whether all input files for all clusters of a brochure are present in the input data storage region, the input files are automatically tested with the filter regarding their consistency, and the cluster files are then automatically formed without user intervention.

13. Method according to claim 12, wherein the cluster files are automatically transmitted, in particular together with signature information, to a print production system in which signature print data are formed from the cluster files.

14. Method according to one of the preceding claims, wherein the input files and/or the cluster files are observed by means of an observation program that is called directly by the cluster generation program.

15. Method according to one of the preceding claims, wherein print files are first created.

16. Method according to one of the preceding claims, wherein information about the entire document is contained in the input files.

17. Method according to claim 16, where the information is contained in the file name.

18. Method according to one of the claims 1 to 15, wherein information about the entire document is contained in the companion file.

19. Method according to any of the claims 16 to 18, wherein the information comprises information about the total page count, about the range of the pages of a cluster and/or about a signature.

20. Device system (1) with means which are arranged for implementing a method according to one of the preceding claims.

21. Device system according to claim 20, comprising at least one computer with a network connection and a print device (8) indirectly or directly connected with the computer (5).

22. Computer program product that, upon loading and execution on a computer executes the method.
